# EUROPÄISCHE PATENTSCHRIFT

(11) **EP 0 810 541 B1**
(45) Veröffentlichungstag und Bekanntmachung des Hinweises auf die Patenterteilung: **21.07.2004**
(21) Anmeldenummer: 97107919.9
(22) Anmeldetag: 15.05.1997
(51) Int. Cl.: G06K 13/08, G06K 7/00

(54) **Datenkartenaufnahme in einem Gerät mit einer Platine**
Arrangement for a card receiver in an apparatus with a printed circuit board
Agencement d'un récepteur de cartes dans un appareil à platine

(30) Priorität: 29.05.1996 DE 29609474 U
(43) Veröffentlichungstag der Anmeldung: 03.12.1997
(73) Patentinhaber: Siemens Aktiengesellschaft, 80333 München (DE)
(72) Erfinder: Höni, Helmut, Dipl.-Ing. (FH), 78733 Aichhalden (DE)

(56) Entgegenhaltungen:
- EP-A- 0 360 345
- WO-A-92/15106
- DE-A- 19 500 636

## Beschreibung

Die Erfindung betrifft eine Datenkartenaufnahme in einem Gerät mit einer Platine, wobei die Datenkartenaufnahme einen Schlitten aufweist, welcher parallel zur Platine verschiebbar gelagert ist und auf welchem die Datenkarten auflegbar sind und außerdem Mittel vorgesehen sind, welche in einer Endstellung des Schlittens eine sichere Kontaktierung einer auf dem Schlitten liegenden Datenkarte mit einem an der Platine befestigten Kontaktfedersatz gestatten.

Bei gewissen Anwendungen von Datenkarten, beispielsweise in einem Umfeld mit schlechten Lichtverhältnissen oder rauhen klimatischen Bedingungen, gegebenenfalls auch mit ungünstigen Einbau- oder Anordnungssituationen, wie sie beispielsweise im Fahrerhaus eines Nutzfahrzeuges gegeben sind, ist das Eingeben von Datenkarten in ein entsprechend ausgebildetes Gerät lediglich durch einen Schlitz deshalb nicht besonders handhabungsfreundlich, weil der Schlitz zum Eingeben einer Datenkarte vielfach erst "gesucht" werden muß und oft mehrere Eingabeversuche erforderlich sind. Im genannten Anwendungsfall kommt hinzu, daß, um Manipulationen zu vermeiden, die Datenkarten im eingegebenen Zustand unzugänglich sein sollten. Außerdem ist es bei Anwendungen entsprechend des Fahrzeugeinsatzes im Freien, aber auch im Fahrerhaus eines Nutzfahrzeuges, wo eine erhebliche Verschmutzungsgefahr gegeben ist, erforderlich, daß Maßnahmen gegen das Eindringen von Staub und Wasser getroffen sein müssen, so daß es auch aus den letztgenannten Gründen nicht sinnvoll wäre, in dem genannten Anwendungsmilieu für die Eingabe von Datenkarten an dem betreffenden Gerät lediglich einen Schlitz vorzusehen. Da eine mit einem geeigneten Verschluß für die Ein-/Ausgabeöffnung und mit einer selbsttätig wirkenden Einzugseinrichtung für die Datenkarten versehene Datenkartenaufnahme oder ein funktionsfertig einbaubares Datenkarten-Aufnahmeaggregat aus Kostengründen im allgemeinen ausscheiden, liegt es nahe, einen verschiebbaren Träger, das heißt eine Schublade beziehungsweise einen Schlitten vorzusehen, mittels dessen die Datenkarten zwischen der Eingabe-/Entnahmeposition und der Lese-/Schreibposition transportiert werden können. Ein derartiger Schlitten ermöglicht ein loses Auf- beziehungsweise Einlegen der Datenkarten in eine in geeigneter Weise in dem Schlitten ausgebildete Fassung, er kann verriegelt werden und er bietet durch Vorsehen einer Frontblende gegenüber der Frontwand des betreffenden Gerätegehäuses eine Abdichtmöglichkeit.

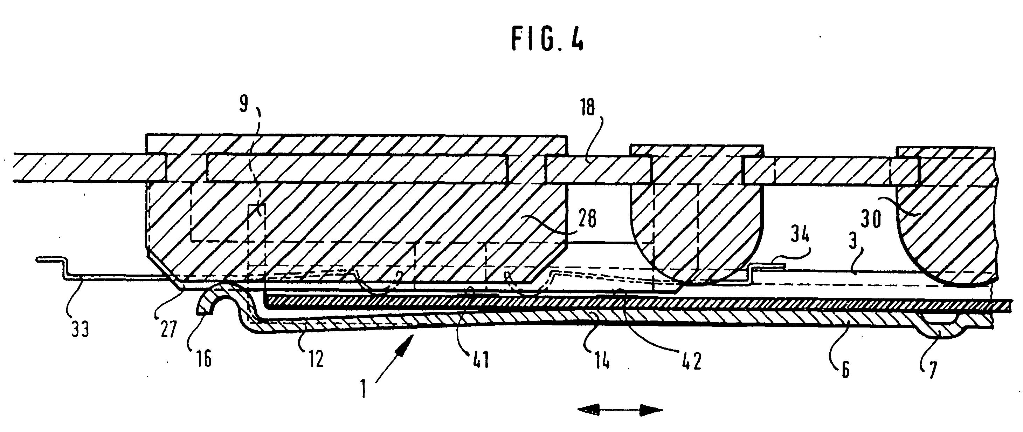

Diese Vorgehensweise, das heißt die Verwendung eines verschiebbaren Schlittens, mit welchem die Datenkarten in die Lese-/Schreibposition gebracht werden, und das lose Auflegen von Datenkarten auf den Schlitten bedingt eine erhebliche Erweiterung des Toleranzfeldes senkrecht zur Bewegungsebene der Datenkarten. Dadurch besteht die Gefahr einer mangelhaften oder nicht erzielbaren Kontaktierung zwischen den Kontakten ' der Datenkarten und den Kontaktfedern eines für die Kontaktierung vorgesehenen und in dem betreffenden Gerät ortsfest angeordneten, vorzugsweise an einer Platine befestigten Kontaktfedersatzes. Abgesehen von einer möglichen Welligkeit einer Datenkarte sind aufgrund des relativ breiten Toleranzfeldes bei einer Anwendung in Fahrzeugen Kontaktunsicherheiten zusätzlich auch durch Schwingungen gegeben. Aus der EP-A-0 360 345 ist eine Datenkartenaufnahme nach dem Oberbegriff des Anspruchs 1 bekannt. Hier dient eine Kulissenführung dazu, die Karte an den Gegenkontakt des Lesers zu drücken. Eine Blattfeder 17 in Fig. 4 dient dazu, die Chipkarte entgegen der Einschubrichtung zu belasten und dadurch die Chipkarte gegen einen begrenzenden Anschlag zu drücken. In der WO 92/15106 ist eine Feder vorhanden, um ein akustisches Signal zu erzeugen. In der DE-A-195 00 636 federn Kontakte 40, 42 in der Endstellung der Karte gegen diese.

Die Aufgabe der vorliegenden Erfindung bestand somit darin, bei einer gattungsgemäßen Datenkartenaufnahme durch einfache konstruktive Maßnahmen die erforderliche Kontaktsicherheit zu schaffen, gleichzeitig aber Schwergängigkeit und Schleifspuren auf den Datenkarten zu vermeiden.

Die Lösung der Aufgabe geht aus dem Anspruch 1 hervor. Ausführungsvarianten sind in den Unteransprüchen beschrieben.

Der entscheidende Vorteil der Erfindung ist darin zu sehen, daß beim Verschieben des Schlitten ein Zusammenwirken der Steuerkonturen mit den Blattfedern erfolgt und die Blattfedern,die im Gegensatz zum nachstehend beschriebenen Ausführungsbeispiel auch als zusätzliche Teile am Schlitten angebracht sein können, erst kurz vor dem Ende der Einschubbewegung wirksam werden. Dadurch werden Schleifspuren auf den Datenkarten vermieden, ein erheblicher Hub für den Toleranzausgleich erzielt und für extreme Anwendungsfälle eine ausreichend hohe Kontaktkraft und Schwingungssicherheit ermöglicht. Gleichzeitig dienen die Blattfedern als Bremse, mit anderen Worten, sie bieten einen gewissen Widerstand beim Verschieben des Schlittens, was die Handhabung verbessert. Besonders vorteilhaft ist ferner die unmittelbare Ausbildung der Blattfedern an dem Schlitten sowie die spritzgießtechnische Zuordnung der Steuerkonturen indem diese mittels sogenannter Outserttechnik in Form von Stegen an einer metallischen Montageplatine des Gerätes angeformt sind.

Der Vollständigkeit halber sei an dieser Stelle darauf hingewiesen, daß die Ausbildung von Führungen des Schlittens, von Anschlägen und von den Datenkarten zugeordneten Niederhaltern deshalb eine besonders einfache Herstellung der Datenkartenaufnahme darstellt, weil die genannten Elemente in einem Arbeitsgang mit der outserttechnischen Bestückung der Montageplatine erstellt werden. Diese Lösung ist in besonderer Weise raumnutzend und großseriengeeignet. Auf der anderen Seite ist es aber auch denkbar einen die genannten Elemente einer Datenkartenaufnahme umfassenden Rahmen derart herzustellen, daß er beispielsweise mit einer Leiterplatte, an welcher die Outserttechnik bekannterweise nicht anwendbar ist, rastend verbindbar ist. In jedem Falle bietet die Erfindung den durch großserienbedingte Toleranzen erforderlichen Toleranzausgleich und eine zuverlässige Kontaktierung.

Ferner sei erwähnt, daß der Schlitten als ein mittelbar verschiebbarer Träger ausgebildet sein kann, der mittels einer in dem betreffenden Gerät verschiebbar gelagerten Schublade betätigt wird oder daß der Schlitten selbst eine Schublade mit einer der Aufnahme der Datenkarten dienenden Wanne und einer vorzugsweise als dekoratives Element ausgebildeten Frontwand darstellt. Dabei läßt sich die Frontwand relativ schmal ausbilden und bei Verwendung eines geeigneten Kunststoffs die erfindungsgemäßen Blattfedern unmittelbar im Wannenboden ausformen. Bei Verwendung einer Verriegelungs- und Auslöseeinrichtung läßt sich die Schublade in der Lese-/Schreibposition verriegeln und nach Vorliegen bestimmter Kriterien, beispielsweise durch eine Tastenbetätigung entriegeln und in eine Greifposition verschieben.

Im folgenden sei die Erfindung anhand von Zeichnungen eines Ausführungsbeispiels einer Datenkartenaufnahme näher erläutert.
Es zeigen:
- Figur 1: eine perspektivische Darstellung des gemäß des gewählten Ausführungsbeispiels vorgesehenen Schlittens,
- Figur 2: eine perspektivische Teildarstellung einer in Outserttechnik mit Bauelementen für die erfindungsgemäße Datenkartenaufnahme bestückten und mit einem Kontaktfedersatz versehenen Montageplatte von unten,
- Figur 3: einen Schnitt der beispielhaften Datenkartenaufnahme gemäß der Schnittlinie A in Figur 2, wobei sich der Schlitten in der Lese-/Schreibposition befindet,
- Figur 4: eine vergrößerte Schnittdarstellung der Datenkartenaufnahme gemäß der Schnittlinie B in Figur 2 bei einer Stellung des Schlittens außerhalb der Lese-/Schreibposition.

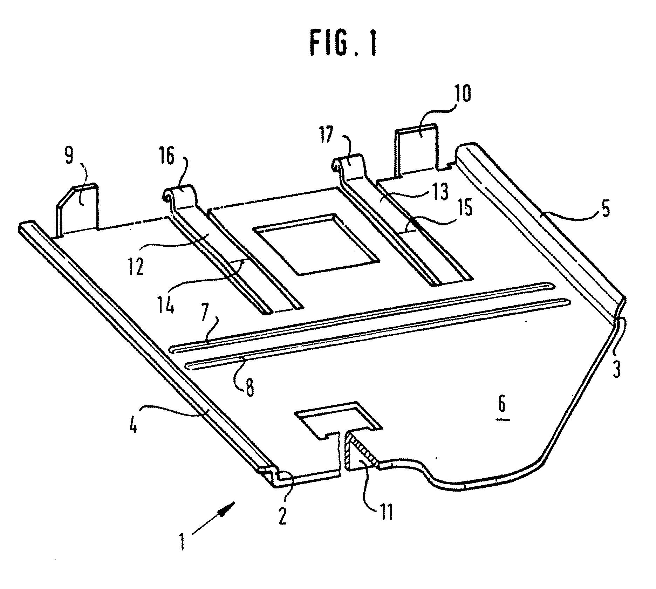

Gemäß der Figur 1 ist der Schlitten 1 als flache u-profilierte Schale ausgebildet, an deren Schenkel 2, 3 Führungsschienen 4, 5 angeformt sind. Der Boden 6 des Schlittens 1 ist durch Sicken 7, 8 versteift. Ferner sind an dem Schlitten, der den Datenkarten als Auflage dient, den Datenkarten zugeordnete Anschläge in Form von Lappen 9, 10 ausgebildet. Ein weiterer Lappen 11 weist in die entgegengesetzte Richtung. Mit 12 und 13 sind Blattfedern bezeichnet, die unmittelbar im Boden 6 des Schlittens 1 freigespart und herausgebogen sind. Jede Blattfeder 12, 13 ist in sich gebogen oder mit einem definierten Knick 14, 15 versehen und weist an ihrem freien Ende einen Schleifer 16 bzw. 17 auf.

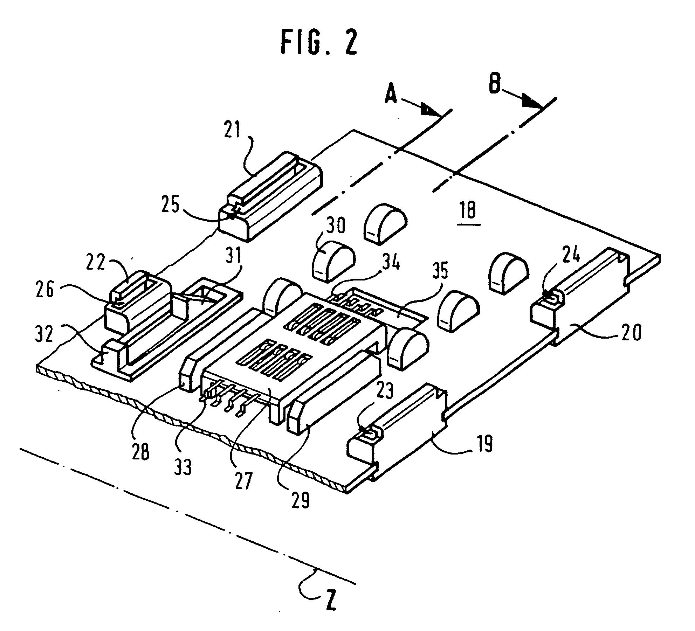

Aus der in Figur 2 dargestellten Untersicht eines Teils einer in Outserttechnik bestückten Montageplatte 18 sind dem Schlitten 1 zugeordnete Führungskörper 19, 20, 21 und 22 mit spritzgießtechnisch ausgebildeten, den Führungsschienen 4, 5 des Schlittens 1 entsprechenden Schlitzen 23, 24, 25 und 26 ersichtlich. Außerdem zeigt die Figur 2 einen an der Montageplatte 18 vorzugsweise durch Verrasten befestigten Kontaktfedersatz 27 und diesem beiderseits zugeordnete Stege 28 und 29, die, wenn der Schlitten 1 an der Montageplatte 18 montiert ist, mit den Blattfedern 12, 13 zusammenwirken, das heißt beim Verschieben des Schlittens 1 als Steuerkonturen wirken, wobei die Blattfedern 12, 13 derart verschwenkt werden, daß sie nicht mehr in die Auflagefläche der Datenkarten auf dem Boden 6 des Schlittens 1 eingreifen. Mit 30 ist einer von mehreren den Datenkarten zugeordneten Niederhaltern bezeichnet. Ein Riegel 31 sowie ein Anschlag 32 sind ebenfalls als Teil an der Montageplatte 18 angeformt. Sie dienen der Begrenzung der Bewegung des Schlittens 1 indem sie mit dem Lappen 9 des Schlittens 1 zusammenwirken. Stellvertretend für die einzelnen Kontaktfedern des Kontaktfedersatzes 27 sind zwei gegenüberliegende Kontaktfedern mit 33 und 34 bezeichnet. Ein der Übersichtlichkeit halber nicht dargestellter, flexibler Flachleiter, mit dessen Leiterbahnen die Kontaktfedern 33, 34 in geeigneter Weise kontaktiert sind, verbindet den Kontaktfedersatz 27 mit einer nicht dargestellten Leiterplatte des betreffenden Gerätes. Ein mit 35 bezeichneter Durchbruch ist für die Durchführung des Flachleiters durch die Montageplatte 18 zu einer Steckverbindung auf der Leiterplatte vorgesehen.

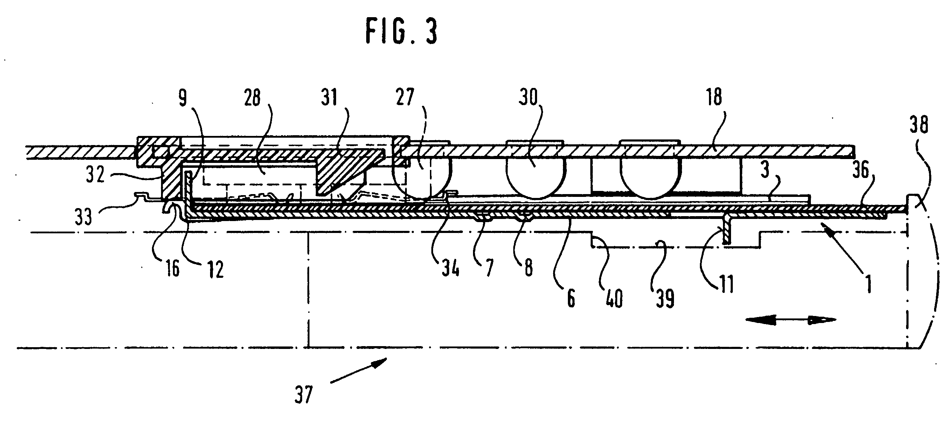

Die Figur 3 zeigt eine um die Achse Z in Figur 2 um 180° gedrehte Schnittansicht der Datenkartenaufnahme gemäß der Schnittlinie A in Figur 2, wobei im Gegensatz zu Figur 2 der Schlitten 1 montiert und eine Datenkarte 36 eingelegt ist. Bei der Montage des Schlittens 1 an der Montageplatte 18 wird der Riegel 31 durch den Lappen 9 angehoben und schnappt danach wieder in die in Figur 3 gezeigte Stellung. Das heißt der Riegel 31 und der Anschlag 32 begrenzen den Verschiebeweg des Schlittens 1. Wie aus der Figur 3 ferner hervorgeht kann der Schlitten 1 mittels einer aufgelegten, leicht überstehenden Datenkarte 36 in die Lese-/Schreibposition verschoben werden. Üblicherweise ist bei einer derartigen Ausbildung der Datenkartenaufnahme jedoch vorgesehen, daß die Betätigung des Schlittens 1 bzw. das Verschieben einer aufgelegten Datenkarte 36 mittels einer schematisch dargestellten vorzugsweise verriegelbaren Schublade 37 erfolgt, die im geschlossenen Zustand den Schlitten 1 und die Datenkarte 36 mittels einer geeigneten Frontwand 38 verdeckt. Die Mitnahme des Schlittens 1 durch die Schublade 37 erfolgt indem der Lappen 1 beispielsweise in eine geeignete Freisparung 39 eingreift und nach einem für die Schubladenöffnung erforderlichen Leerhub mit einer Wand 40 oder Freisparung 39 zusammenwirkt. Bei dem in Figur 3 gezeigten Zustand der Datenkartenaufnahme sind die Blattfedern 12 und 13 frei beweglich und haben die eingelegte Datenkarte 36 gegen die Kontaktfedern 33, 34 angehoben, das heißt die Datenkarte 36 liegt an dem nicht näher bezeichneten Rahmen des Kontaktfedersatzes 27 an und die Kontaktfedern 33, 34 stehen mit den betreffenden Kontakten der Datenkarte 36, von denen in Figur 4 zwei 41 und 42 symbolisch dargestellt sind, in Kontakt. Bei dem in Figur 4 gezeigten Zustand liegen die Schleifer 16, 17 der Blattfedern 12 und 13 auf den Stegen 28, 29 auf, das heißt auch die Knicke 14, 15 der Blattfedern 12, 13 befinden sich außerhalb der Auflagefläche der Datenkarte 36 auf dem Boden 6 des Schlittens 1.

Der Vollständigkeit halber sei abschließend noch erwähnt, daß die maßliche Abstimmung der Datenkartenaufnahme derart gewählt werden kann, daß, um Schleifspuren auf den Datenkarten 36 und größere Abnutzung der Kontaktfedern 33, 34 zu vermeiden, die Kontaktierung ausschließlich durch die Blattfedern 12, 13 erfolgt oder daß bei der Wahl eines engeren Spaltes zwischen dem Rahmen des Kontaktfedersatzes 27 und dem Boden 6 des Schlittens 1 eine Kontaktierung einer Datenkarte 36 grundsätzlich, das heißt auch ohne die Blattfedern gegeben ist und in diesem Falle die Blattfedern der Erzielung einer gleichmäßigen Kontaktkraft und der bei einem Einsatz im Kraftfahrzeug erforderlichen Schwingungssicherheit dienen.

## Patentansprüche

1. Datenkartenaufnahme in einem Gerät mit einer Platine (18), wobei die Datenkartenaufnahme einen Schlitten (1) aufweist, welcher parallel zur Platine (18) erschiebbar gelagert ist und auf welchem die Datenkarten (36) auflegbar sind und außerdem Mittel vorgesehen sind, welche in einer Endstellung des Schlittens eine sichere Kontaktierung einer auf dem Schlitten liegenden Datenkarte (36) mit einem an der Platine befestigten Kontaktfedersatz (27, 33,3 4) gestatten,
**dadurch gekennzeichnet,**
**daß** an dem Schlitten (1) in Verschieberichtung weisende Blattfedern (12, 13) angeordnet sind und
**daß** der Platine (18)die Blattfedern (12, 13) niederhaltende bzw. freigebende Steuerkonturen zugeordnet sind derart, daß die Blattfedern (12, 13) in der Endstellung des Schlittens (1) in Richtung des Kontaktfedersatzes (27) verschwenkt sind, wobei sie in die Auflagefläche für die Datenkarten (36) eingreifen.

2. Datenkartenaufnahme nach Anspruch 1,
**dadurch gekennzeichnet,**
**daß** die die Blattfedern (12, 13) steuernden Stege (28, 29) in bezug auf den Kontaktfedersatz (27) in Parallellage zu den Kontaktfedern (33, 34) an der Platine (18) angeordnet sind.

3. Datenkartenaufnahme nach Anspruch 1,
**dadurch gekennzeichnet,**
**daß** Führungen für den Schlitten (1), den Datenkarten zugeordnete Niederhalter sowie als Steuerkonturen wirkende Stege (28, 29) unmittelbar an der Platine (18) angeformt sind.

4. Datenkartenaufnahme nach Anspruch 1,
**dadurch gekennzeichnet,**
**daß** Führungen (19, 20, 21, 22) für den Schlitten (1), den Datenkarten (36) zugeordnete Niederhalter (30) sowie als Steuerkonturen wirkende Stege (28, 29) an einem Rahmen ausgeformt sind, welcher mit der Platine vorzugsweise rastend verbindbar ist.

5. Datenkartenaufnahme nach Anspruch 1,
**dadurch gekennzeichnet,**
**daß** die Blattfedern (12, 13) gewölbt oder dachförmig ausgebildet sind und das jeweils freie Ende angebogen und zu einem Schleifer (16, 17) geformt ist.

6. Datenkartenaufnahme nach Anspruch 1,
**dadurch gekennzeichnet,**
**daß** der Schlitten (1) als Schublade ausgebildet ist.

7. Datenkartenaufnahme nach Anspruch 1,
**dadurch gekennzeichnet,**
**daß** der Schlitten (1) mit einem Mitnehmer (11) für eine mittelbare Betätigung versehen ist.

## Claims

1. Data card holder in an apparatus with a printed circuit board (18), the data card holder having a carriage (1) which is mounted so as to be capable of being displaced in parallel with the printed circuit board (18) and on which the data cards (36) can be positioned, and in addition means being provided which permit, in an end position of the carriage, contact to be reliably made between a data card (36) resting on the carriage and a contact spring set (27, 33, 34) which is attached to the printed circuit board, **characterized in that** leaf springs (12, 13) which point in the displacement direction are arranged on the carriage (1), and **in that** control cams which retain or release the leaf springs (12, 13) are assigned to the printed circuit board (18) in such a way that in the end position of the carriage (1) the leaf springs (12, 13) are pivoted in the direction of the set (27) of contact springs, said leaf springs (12, 13) engaging in the supporting surface for the data cards (36).

2. Data card holder according to Claim 1, **characterized in that** the webs (28, 29) which control the leaf springs (12, 13) are arranged on the printed circuit board (18) in a position with respect to the contact spring set (27) in which they are parallel with the contact springs (33, 34).

3. Data card holder according to Claim 1, **characterized in that** guides for the carriage (1), retaining elements which are assigned to the data cards and webs (28, 29) which act as control cams are formed directly on the printed circuit board (18).

4. Data card holder according to Claim 1, **characterized in that** guides (19, 20, 21, 22) for the carriage (1), retaining elements (30) which are assigned to the data card (36) and webs (28, 29) which act as control cams are formed on a frame which can be connected in a preferably latching fashion to the printed circuit board.

5. Data card holder according to Claim 1, **characterized in that** the leaf springs (12, 13) are of curved or roof-shaped design and the respective free end is bent and shaped into a slider (16, 17).

6. Data card holder according to Claim 1, **characterized in that** the carriage (1) is embodied as a drawer.

7. Data card holder according to Claim 1, **characterized in that** the carriage (1) is provided with a driver (11) for indirect activation.

## Revendications

1. Récepteur de cartes de données dans un appareil à platine (18), le récepteur de cartes de données présentant un coulisseau (1) logé de manière à pouvoir se déplacer parallèlement par rapport à la platine (18), sur lequel peuvent être déposées les cartes de données (36) et sont en outre prévus des moyens pour permettre, dans une position finale du coulisseau, l'établissement d'un contact sûr entre une carte de données (36) déposée sur le coulisseau et un jeu de lames de contact (27, 33, 34) fixé à la platine,
**caractérisé en ce que**
des ressorts à lame (12, 13) orientés dans le sens du déplacement sont agencés sur le coulisseau (1) et **en ce que** des profils de commande serrant resp. libérant les ressorts à lame (12, 13) sont associés à la platine (18) de manière telle que, lorsque le coulisseau (1) se trouve en position finale, les ressorts à lame (12, 13) subissent un pivotement vers le jeu de lames de contact (27), s'engageant dans la surface de support des cartes de données (36).

2. Récepteur de cartes de données selon la revendication 1,
**caractérisé en ce que**,
par rapport au jeu de lames de contact (27), les ailettes (28, 29) qui commandent les ressorts à lame (12, 13) sont disposées parallèlement aux lames de contact (33, 34) sur la platine (18).

3. Récepteur de cartes de données selon la revendication 1,
**caractérisé en ce que**
des guidages pour le coulisseau (1), des éléments de serrage affectés aux cartes de données ainsi que des ailettes (28, 29) agissant comme profils de commande sont directement réalisés d'une seule pièce avec la platine (18).

4. Récepteur de cartes de données selon la revendication 1,
**caractérisé en ce que**
des guidages (19, 20, 21, 22) pour le coulisseau (1), des éléments de serrage (30) affectés aux cartes de données (36) ainsi que des ailettes (28, 29) agissant comme profils de commande sont réalisés sur un châssis-support pouvant être assemblé avec la platine de préférence par encliquetage.

5. Récepteur de cartes de données selon la revendication 1,
**caractérisé en ce que**
les ressorts à lame (12, 13) sont de configuration bombée ou réalisés en forme de toit et **en ce que** l'extrémité respectivement libre est pliée et prend la forme d'un curseur (16, 17).

6. Récepteur de cartes de données selon la revendication 1,
**caractérisé en ce que**
le coulisseau (1) est réalisé comme tiroir.

7. Récepteur de cartes de données selon la revendication 1,
**caractérisé en ce que**
le coulisseau (1) est pourvu d'un entraîneur (11) pour actionnement indirect.
